(19) Europäisches Patentamt
European Patent Office
Office européen des brevets

(11) Veröffentlichungsnummer: **0 193 242**
**B1**

(12) **EUROPÄISCHE PATENTSCHRIFT**

(45) Veröffentlichungstag der Patentschrift: **19.09.90**

(51) Int. Cl.⁵: **G 01 M 11/00**

(21) Anmeldenummer: **86200269.8**

(22) Anmeldetag: **21.02.86**

(54) Optisches Zeitbereichsreflektometer mit Heterodyn-Empfang.

(30) Priorität: **27.02.85 DE 3506884**

(43) Veröffentlichungstag der Anmeldung:
**03.09.86 Patentblatt 86/36**

(45) Bekanntmachung des Hinweises auf die
Patenterteilung:
**19.09.90 Patentblatt 90/38**

(84) Benannte Vertragsstaaten:
**DE FR GB IT SE**

(56) Entgegenhaltungen:
**EP-A-0 125 758**

**REVIEW OF THE ELECTRICAL COMMUNICATION LABORATORIES, Band 31, Nr. 3, Mai 1983, Seiten 290-298, Tokyo, JP; M. NAKAZAWA et al.: "Measurement technique for single-mode optical fiber"**

(73) Patentinhaber: **Philips Patentverwaltung GmbH
Wendenstrasse 35 Postfach 10 51 49
D-2000 Hamburg 1 (DE)**

(84) **DE**

(73) Patentinhaber: **N.V. Philips'
Gloeilampenfabrieken
Groenewoudseweg 1
NL-5621 BA Eindhoven (NL)**

(84) **FR GB IT SE**

(72) Erfinder: **Beckmann, Friedrich-Karl
Flagentwiete 44
D-2080 Pinneberg (DE)**
Erfinder: **Hoppe, Wolfgang
Mühlenweg 35
D-2000 Norderstedt (DE)**
Erfinder: **Knöcher, Rheinhard, Dr.
Wacholderweg 23
D-2200 Elmshorn (DE)**

(74) Vertreter: **Koch, Ingo, Dr.-Ing. et al
Philips Patentverwaltung GmbH Wendenstrasse
35 Postfach 10 51 49
D-2000 Hamburg 1 (DE)**

(56)  Entgegenhaltungen:

IEEE TRANSACTIONS ON INSTRUMENTATION
AND MEASUREMENT, Band IM-29, Nr. 4,
Dezember 1980, Seiten 348-351, New York, US;
H. TAKAHASHI et al.: "A new automatic
measuring method for optical fibers using an
acoustooptic tunable filter"

PATENT ABSTRACTS OF JAPAN, Band 8, Nr.
257 (P-316)1694r, 24. November 1984; & JP - A -
59 126 912 (SUMITOMO DENKI KOGYO K.K.)
21.07.1984

## Beschreibung

Die Erfindung bezieht sich auf ein optisches Zeitbereichsreflektometer (OTDR) mit Heterodyn-Empfang zur Bestimmung der Dämpfung einer Lichtleitfaser durch Messung des rückgestreuten Anteils von in die Faser gesendeten Lichtimpulsen, mit einem Dauerlicht sendenden Sender, dessen Licht einerseits in einen den Lokaloszillator bildenden Strahl aufgespalten wird und andererseits in einen Meßstrahl, welcher durch einen akustooptischen Modulator (AOM) impulsweise und mit um eine akustische Frequenz verschobener optischer Frequenz in die zu prüfende Lichtleitfaser gesendet wird, wobei der den Lokaloszillator bildende Strahl und der rückgestreute Teil des Meßstrahls gemeinsam einem optischen Empfänger zugeführt werden, welcher als Ausgangssignal ein elektrisches Signal erzeugt, aus welchem ein Signal mit einer der akustischen Frequenz entsprechenden Frequenz ausgefiltert wird, dessen zeitabhängige Amplitude als Maß für die längenabhängige Dämpfung der Lichtleitfaser ausgewertet wird.

Eine derartige Anordnung ist durch die Veröffentlichung ECOC 83 "9th European Conference on Optical Communication", Seiten 177 bis 180, bekannt. Dabei dient ein akustooptischer Modulator (AOM) ausschließlich dazu, die optische Frequenz des Sendesignals einer Lichtquelle zu verschieben. Zur Aufspaltung des von einem Laser gesendeten Lichts wird ein Strahlteiler und zur Ein- und Auskopplung der Lichtsignale der Test-Faser ein Faserkoppler verwendet. Dabei gelangt nur ein sehr geringer Teil der Lichtenergie des optischen Senders über die Test-Faser in den optischen Empfänger. Ein solcher Überlagerungs-OTDR ermöglicht wegen des Heterodyn-Empfangs eine erhebliche Verbesserung des Signal-Rauschverhältnisses (S/N), jedoch wird der Gewinn an Empfindlichkeit durch erhebliche Schaltungsverluste verringert.

Durch Review of the Electrical Communication Laboratories, Vol. 31 No.3 1983 Seite 291 ist es bekannt, daß Strahlverzweiger herkömmlicher Art durch einen akustooptischen Modulator ersetzt werden können.

Der Erfindung liegt die Aufgabe zugrunde, die Schaltungsverluste auf dem Weg vom optischen Sender über die Testfaser zum optischen Empfänger zu verringern.

Die Lösung gelingt dadurch, daß der akustooptische Modulator (AOM) zusätzlich ein optisches Verzweigungselement bildet.

Eine vorteilhafte Ausführungsart der Erfindung ist dadurch gekennzeichnet, daß das Dauerlicht des Senders über einen ersten Faserkoppler geführt wird, welcher den größeren Teil des Dauerlichts über den AOM in die Test-Faser leitet, während der geringere Teil als Lokaloszillator-Strahl abgezweigt wird, und daß der rückgestreute Anteil des in die Test-Faser geleiteten Lichts über den direkten Weg des AOM in einen zweiten Faserkoppler gemeinsam mit dem Lokaloszillator-Strahl dem optischen Empfänger zugeführt wird.

Eine besonders vorteilhafte Ausführungsform der Erfindung ist dadurch gekennzeichnet, daß durch den AOM der Lokaloszillator-Strahl vom dem AOM zugeführten Strahl des optischen Senders auf direktem, ungebeugten Weg abgezweigt wird, welcher danach auf direktem, ungebeugtem Weg über einen Zwischen-AOM dem optischen Empfänger zugeführt wird, und daß der vom AOM auf gebeugtem Weg abgehende Meßstrahl auf direktem, ungebeugtem Weg über den Zwischen-AOM in die Test-Faser geleitet wird, während der zurückgestreute Anteil des Meßstrahls über den gebeugten Weg des mit der akustischen Frequenz $f_a + f_z$ erregten Zwischen-AOM mit um $f_a + f_z$ verschobener optischer Frequenz dem optischen Detektor zugeführt wird.

Andere Weiterbildungen der Erfindung sind in den weiteren Unteransprüchen gekennzeichnet.

Infolge der erfindungsgemäßen Doppelfunktion des AOM als Modulator und Strahlverzweiger ersetzt dieser ein zusätzliches passives optisches Element, so daß die interne Schaltungsdämpfung verringert wird.

Für die Ausführungsform nach Anspruch 6 ergibt sich als zusätzlicher Vorteil, daß aufgrund der Verwendung eines Zwischen-AOM ein "gating" des Prüfstreusignals ermöglicht wird, so daß der Dämpfungsverlauf von selektierten Bereichen der Test-Faser gemessen werden kann. Darüber hinaus kann die elektrisch auszuwertende Zwischenfrequenz frei und niedriger gewählt werden, wodurch eine Verringerungdes elektrischen Schaltungsaufwandes möglich wird.

Weitere Vorteile der Erfindung werden anhand der Beschreibung von in der Zeichnung dargestellten vorteilhaften Ausführungsbeispielen erläutert.

Fig. 1 zeigt den Aufbau einer ersten Ausführungsart der Erfindung,

Fig. 2 zeigt eine vorteilhafte Abwandlung des optischen Senders für die Ausführungsart nach Fig. 1,

Fig. 3 zeigt eine vorteilhafte Abwandlung des optischen Empfängers nach Fig. 1,

Fig. 4 zeigt den Aufbau einer zweiten Ausführungsart der Erfindung mit zwei für Mehrfachfunktion genutzten akustooptischen Modulatoren.

Mit den in der Zeichnung dargestellten Anordnungen soll das Dämpfungsverhalten einer Test-Faser F ermittelt werden. Von einem als Laser L ausgebildeten optischen Sender wird Licht in die Faser F gesendet. Gemessen wird der zurückgestreute Anteil dieses Lichts von einem optischen Empfänger bzw. Detektor D, welcher optische Signale in entsprechende elektrische Signale umwandelt. Für die optische Zeitbereichs-Reflektometrie (OTDR) mit Überlagerungsempfang nach dem Heterodyn-Prinzip ist es erforderlich, der empfangenen Signalfrequenz eine Lokaloszillator-Frequenz zu überlagern, wobei sich diese beiden Frequenzen um eine relativ kleine Differenzfrequenz unterscheiden. Man strebt kleine Werte für die Differenzfrequenz an, um den Schaltungsaufwand für die elektronische Verarbeitung der Differenzsignale zu verringern.

Im Faserkoppler 1 wird von dem mit der Fre-

quenz $f_o$ gesendeten Laser-Strahl 2 ein Lokaloszillator-Strahl 3 abgespalten, wobei als Teil 4 der Meßstrahl verbleibt. Der Faserkoppler 1 ist derart gestaltet, daß der Meßstrahl 4 etwa 75 %, der Lokaloszillatorstrahl 3 etwa 25 % der Leistung des Laser-Strahls 2 aufweisen (6 dB-Koppler), da für eine rauscharme, empfindliche Messung hohe Werte der Lichtleistung für den Meßstrahl 4 wichtiger sind als für den Lokaloszillatorstrahl.

Die optische Frequenz des Meßstrahls 4 wird durch den akustooptischen Modulator (AOM) 5 um den Wert $f_a$ erhöht und in Richtung des Pfeiles 6 in die Test-Faser F abgelenkt. Dazu ist es erforderlich, den AOM 5 mit der akustischen Frequenz $f_a$ mittels des Frequenzgenerators 7 zu erregen. Der Torschalter 8 bewirkt, daß nur kurzzeitige Impulsblöcke des Meßstrahls 4 in die Faser F gelangen.

Jeweils nach dem Ende der Impulsdauer beginnt der Meßvorgang. Der von den einzelnen Punkten der Länge der Test-Faser F zurückgestreute Anteil 9 des frequenzverschobenen Meßstrahls 6 wird durch den nicht mehr akustisch erregten AOM 5 ohne Ablenkung über den 6 dB-Faserkoppler 10 gemeinsam mit dem Lokaloszillatorstrahl 3 dem optischen Empfänger D zugeführt. Der Faserkoppler 10 ist als 6 dB-Koppler so gestaltet, daß er ca. 75 % des Strahls 9 und ca. 25 % des Strahls 3 weiterleitet.

Vom in den Empfänger D geleiteten Mischsignal wird die Differenzfrequenz $f_a$ ausgefiltert und ausgewertet.

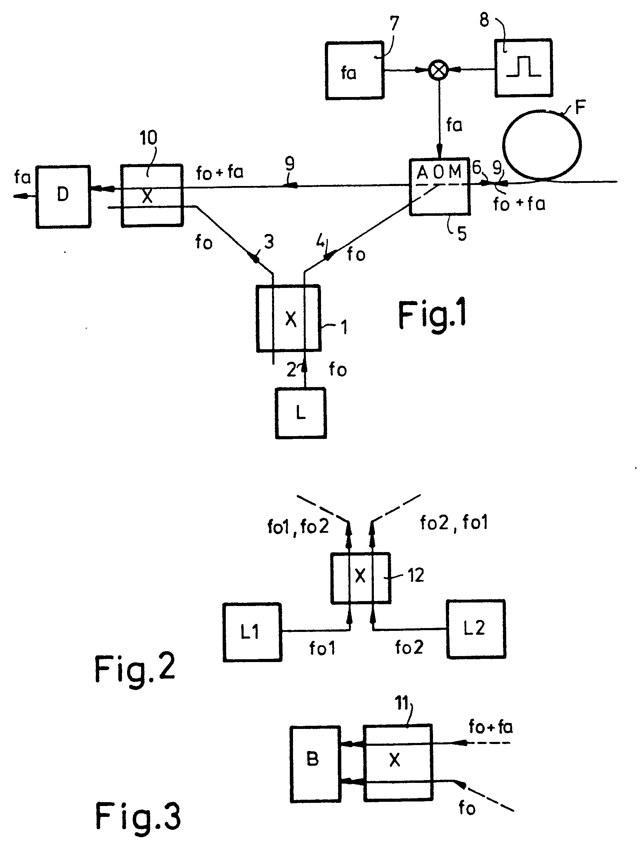

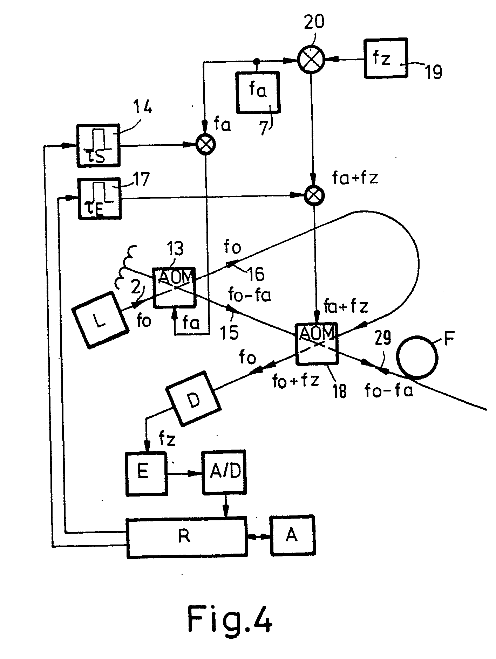

Die in Fig. 1 dargestellte Anordnung ist einfach und weist geringe interne Verluste auf, so daß relativ hohe Rückstreusignale in den Empfänger D geleitet werden. Die Empfindlichkeit und das Signal-Rauschverhältnis S/N läßt sich noch weiter verbessern, wenn statt des 6 dB-Faserkopplers 10 ein 3 dB-Koppler 11 nach Fig. 3 verwendet wird, welcher die eingehenden Signale der Lokaloszillatorfrequenz $f_o$ und des rückgestreuten Lichts (Frequenz $f_o + f_a$) symmetrisch mischt und zu gleichen Teilen auf zwei Ausgänge verteilt und den beiden Eingängen eines balancierten Empfängers B zuführt, welcher beispielsweise in nach "Optics Letters" 1983, Band 8, Seiten 419 bis 421, bekannter Weise aufgebaut ist.

Es ist weiterhin möglich, den 6 dB-Faserkoppler 1 nach Fig. 1 gemäß Fig. 2 durch einen 3 dB-Faserkoppler 12 zu ersetzen und zwei Laser $L_1$ und $L_2$ mit den unterschiedlichen Frequenzen $f_{o1}$ und $f_{o2}$ als Sender zu verwenden. Ist der Abstand der beiden Laserfrequenzen groß genug, beeinflussen sich die Laser nicht. Das OTDR arbeitet dann bezüglich jedes einzelnen Lasers wie oben erläutert.

Da beide Laser-Signale im gleichen AOM 5 frequenzversetzt werden, fallen sie nach Mischung mit den Signalen der jeweils eigenen Lokaloszillatorfrequenz aufeinander und addieren sich. Es ergibt sich folglich eine höhere Empfangsleistung am Ausgang des optischen Empfängers, wobei gleichzeitig die "drop-out" Gefahr durch "fading" (vgl. Electronic Letters 1984, Band 20, Seiten 30 bis 32) verringert wird, da mit zwei voneinander unabhängigen Quellen gesendet wird.

Eine besonders dämpfungsarme und damit bei hohem Signal-Rausch-Verhältnis S/N sehr empfindliche Meßanordnung ist in Fig. 4 dargestellt.

Der Laser L leitet Dauerlicht 2 der Frequenz $f_o$ in den AOM 13, welcher während der vom Torschalter 14 vorgegebenen Sendezeit $\tau s$ mit der akustischen Frequenz $f_a$ des Frequenzgenerators 7 erregt wird. Dann wird ein Meßstrahl 15, welcher eine um die akustische Frequenz $f_a$ erniedrigte optische Frequenz $f_o - f_a$ aufweist, abgelenkt und durch den AOM 14, welcher während der Sendezeit $\tau s$ nicht erregt ist, in die Test-Faser F geleitet. Nach Ende der Sendezeit $\tau s$ wird der Dauerlichtstrahl 2 des Lasers L durch den dann nicht mehr erregten AOM 13 ohne Verschiebung der Frequenz als Lokaloszillatorstrahl 16 benutzt.

Während der Empfangszeit $\tau_E$, welche vom Torschalter 17 vorgegeben ist, wird der zweite AOM 18 akustisch mit der Frequenz $f_a + f_z$ erregt, welche von den Frequenzgeneratoren 7 und 19 über das Summierglied 20 zugeführt wird.

Der Lokaloszillatorstrahl 16 wird auf direktem Weg und folglich ohne Frequenzverschiebung in die zum Detektor führende optische Leitung gerichtet. Das Rückstreusignal 20 aus der Faser F wird nach einer Frequenzverschiebung um $+(f_a + f_z)$ mit der optischen Frequenz $f_o + f_z$ in die Eingangsleitung des optischen Empfängers D geleitet. Von dem elektrischen Empfänger E wird lediglich das Signal mit der Zwischenfrequenz $f_z$ ausgewertet und über den Analog-Digital-Wandler A/E dem Rechner R eingegeben, welcher alle erforderlichen Operationen, insbesondere die Torschalter 14 und 17 steuert und auf dem Anzeigeelement A die aus zahlreichen Rückstreusignalen gemittelten Amplituden in Abhängigkeit der Entfernung der rückstreuenden Faserstellen abbildet.

Mit einer in Fig. 4 dargestellten Meßanordnung ergeben sich auf dem Wege vom sendenden Laser L in die Faser und aus der Faser zurück in den Empfänger B besonders niedrige Dämpfungen. Die Zwischenfrequenz $f_z$ kann beliebig kleiner als die zur Erregung des AOM erforderliche Mindestfrequenz gewählt werden, so daß dann der elektronische Schaltungsaufwand geringer ist als bei bekannten Anordnungen, bei denen die hohe Frequenz $f_a$ als Zwischenfrequenz erhalten wird.

Darüber hinaus bietet die Anordnung nach Fig. 4 den Vorteil, daß durch den Torschalter 17 gezielt steuerbar ist, zu welchen Zeitabschnitten das Rückstreusignal gemessen werden soll. So kann man beispielsweise die Anfangszeit unterdrücken, um den während dieser Zeit extrem hohen Anteil an Fresnel-Reflexen nicht zu erfassen. Auch können bestimmte Längenabschnitte der Test-Faser F gezielt untersucht werden.

**Patentansprüche**

1. Optisches Zeitbereichsreflektometer (OTDR) mit Heterodyn-Empfang zur Bestimmung der Dämpfung einer Lichtleitfaser durch Messung des rückgestreuten Anteils von in die Faser gesendeten Lichtimpulsen, mit einem Dauerlicht sendenden Sender, dessen Licht einerseits in einen den Lokaloszillator bildenden Strahl aufgespalten wird und andererseits in einen Meßstrahl, welcher durch einen akustooptischen Modulator (AOM) impulsweise und mit um eine akustische Frequenz verschobener optischer Frequenz in die zu prüfende Lichtleitfaser gesendet wird, wobei der den Lokaloszillator bildende Strahl und der rückgestreute Teil des Meßstrahls gemeinsam einem optischen Empfänger zugeführt werden, welcher als Ausgangssignal ein elektrisches Signal erzeugt, aus welchem ein Signal mit einer der akustischen Frequenz entsprechenden Frequenz ausgefiltert wird, dessen zeitabhängige Amplitude als Maß für die längenabhängige Dämpfung der Lichtleitfaser ausgewertet wird, dadurch gekennzeichnet, daß der akustooptische Modulator (AOM) zusätzlich ein optisches Verzweigungselement bildet.

2. Anordnung nach Anspruch 1, dadurch gekennzeichnet, daß das Dauerlicht des Senders über einen ersten Faserkoppler geführt wird, welcher den größeren Teil des Dauerlichts über den AOM in die Test-Faser leitet, während der geringere Teil als Lokaloszillator-Strahl abgezweigt wird, und daß der rückgestreute Anteil des in die Test-Faser geleiteten Lichts über den direkten Weg des nicht mehr akustisch erregten AOM in einen zweiten Faserkoppler gemeinsam mit dem Lokaloszillator-Strahl dem optischen Empfänger zugeführt werden.

3. Anordnung nach Anspruch 2, dadurch gekennzeichnet, daß der zweite Faserkoppler so dimensioniert ist, daß das Rückstreusignal erheblich weniger geschwächt wird als der Lokaloszillator-Strahl.

4. Anordnung nach Anspruch 2, dadurch gekennzeichnet, daß der zweite Faserkoppler hinsichtlich der Dämpfung und Übertragung auf zwei Ausgänge symmetrisch ist und die beiden ausgehenden Signale einem balancierten Empfänger zugeführt sind.

5. Anordnung nach einem der Ansprüche 2 bis 4, dadurch gekennzeichnet, daß der erste Faserkoppler hinsichtlich Dämpfung und Übertragung auf die beiden Ausgänge symmetrisch ist und zwei Eingänge aufweist, denen Sendestrahlen von zwei Licht mit verschiedener Frequenz aussendenden Lasern zugeführt sind.

6. Anordnung nach Anspruch 1, dadurch gekennzeichnet, daß durch den AOM der Lokaloszillator-Strahl vom dem AOM zugeführten Strahl des optischen Senders auf direktem, ungebeugtem Weg abgezweigt wird, welcher danach auf direktem, ungebeugtem Weg über einen Zwischen-AOM dem optischen Empfänger zugeführt wird, und daß der vom AOM auf gebeugtem Weg abgehende Meßstrahl auf direktem, ungebeugtem Weg über den Zwischen-AOM in die Test-Faser geleitet wird, während der zurückgestreute Anteil des Meßstrahls über den gebeugten Weg des mit der akustischen Frequenz $f_a + f_z$

erregten Zwischen-AOM mit um $f_a + f_z$ verschobener optischer Frequenz dem optischen Detektor zugeführt wird.

7. Anordnung nach Anspruch 6, dadurch gekennzeichnet, daß die Zeitdauer der akustischen Erregung des AOM und des Zwischen-AOM unabhängig voneinander steuerbar sind.

8. Anordnung nach Anspruch 6 oder 7, dadurch gekennzeichnet, daß die Frequenzverschiebungen des in die Test-Faser geleiteten Signals und des in den optischen Empfänger geleiteten Rückstreusignals gegensinnig mit umgekehrtem Vorzeichen erfolgen.

## Revendications

1. Réflectomètre optique à domaine de temps (OTDR) à réception hétérodyne pour déterminer l'atténuation d'une fibre optique par mesure de la partie rétrodiffusée d'impulsions lumineuses introduites dans la fibre, comportant un émetteur de lumière continue dont la lumière est divisée, d'une part, en un faisceau d'oscillateur local et, d'autre part, en un faisceau de mesure qui, par un modulateur acousto-optique (AOM), est introduit dans la fibre optique à vérifier à une fréquence optique décalée d'une fréquence acoustique, conditions dans lesquelles le faisceau d'oscillateur local ainsi que la partie rétrodiffusée du faisceau de mesure sont dirigés conjointement vers un récepteur optique qui, comme signal de sortie, engendre un signal électrique d'où est extrait un signal ayant une fréquence correspondant à la fréquence acoustique et dont l'amplitude dépendante du temps est évaluée comme mesure de l'atténuation de la fibre optique, dépendante de la longueur, caractérisé en ce que le modulateur acousto-optique (AOM) forme également un élément de déviation optique.

2. Dispositif selon la revendication 1, caractérisé en ce que la lumière continue de l'émetteur est amenée à passer par un premier coupleur de fibres qui, à travers le AOM, introduit la majeure partie de la lumière continue dans la fibre d'essai, tandis que la partie plus faible est dérivée comme faisceau d'oscillateur local, et en ce que, conjointement avec le faisceau d'oscillateur local, la partie rétrodiffusée de la lumière introduite dans la fibre d'essai est dirigée par un deuxième coupleur de phases vers le récepteur optique pa[r] le trajet direct du AOM.

3. Dispositif selon la revendication 2, caract[é]risé en ce que le deuxième coupleur de fibres e[st] dimensionné de façon que le signal de rétrodif[fu]sion est atténué dans une mesure considérab[le-]ment plus faible que le faisceau d'oscillat[eur] local.

4. Dispositif selon la revendication 2, cara[cté]risé en ce que, eu égard à l'atténuation et [à la] transmission, le deuxième coupleur de phase[s est] symétrique sur deux sorties et en ce que les [deux] signaux de sortie sont fournis à un réce[pteur] équilibré.

5. Dispositif selon l'une des revendicatio[ns 1 à] 4, caractérisé en ce que, eu égard à l'atté[n-]

# EP 0 193 242 B1

et à la transmission, le premier coupleur de phases 1 est symétrique sur les deux sorties et en ce qu'il présente deux entrées recevant des faisceaux à partir de deux lasers émettant de la lumière à fréquences différentes.

6. Dispositif selon la revendication 1, caractérisé en ce qu'au moyen du AOM, suivant un trajet direct non diffracté, le faisceau d'oscillateur local est dévié du faisceau reçu par le AOM à partir de l'émetteur optique, faisceau d'oscillateur local qui, ensuite, à travers un AOM intermédiaire, est dirigé vers le récepteur optique suivant un trajet direct non diffracté et en ce que, à travers le AOM intermédiaire, le faisceau de mesure partant du AOM suivant un trajet diffracté est introduit dans la fibre d'essai suivant un trajet direct non diffracté, tandis que, à travers le trajet diffracté du AOM intermédiaire excité à la fréquence acousti-que $f_a + f_z$, la partie rétrodiffusée du faisceau de mesure est dirigée vers le détecteur optique à une fréquence optique décalée de $f_a + f_z$.

7. Dispositif selon la revendication 6, caractérisé en ce que les durées de l'excitation acoustique du AOM et du AOM intermédiaire peuvent être commandées indépendamment l'une de l'autre.

8. Dispositif selon la revendication 6 ou 7, caractérisé en ce que les décalages de fréquence du signal introduit dans la fibre d'essai et du signal de rétrodiffusion introduit dans le récepteur optique s'effectuent dans des sens opposés et avec des signes opposés.

## Claims

1. An optical time-domain reflectometer (OTDR) using heterodyne reception for determining the attenuation of an optical fibre by measuring the backscattered portion of light pulses launched into the fibre, comprising a transmitter emitting continuous light which is split into a local-oscillator beam and a measuring beam which is pulsed by an acousto-optical modulator (AOM) and launched into the optical fibre to be tested with an optical frequency which is offset by an acoustic frequency, the local-oscillator beam and the backscattered portion of the measuring beam both being directed to an optical receiver producing an electric output signal from which a signal of a frequency corresponding to said acoustic frequency is derived whose time-dependent amplitude is determined as a measure of the length-dependent attenuation of the optical fibre, characterized in that the acousto-optical modulator (AOM) also functions as an optical deflection element.

2. An arrangement as claimed in Claim 1, characterized in that the continuous light from the transmitter is passed through a first fibre coupler to route most part of the continuous light via the AOM into the test fibre and to tap off the smaller part as the local-oscillator beam and in that together with the local oscillator beam the backscattered portion of the light launched into the test fibre is transmitted via the direct path of the AOM, which is no longer acoustically excited to the optical receiver by means of a second fibre coupler.

3. An arrangement as claimed in Claim 2, characterized in that the second fibre coupler is dimensioned in such a way that the backscatter signal is attenuated to a substantially smaller extent than the local-oscillator beam.

4. An arrangement as claimed in Claim 2, characterized in that the second fibre coupler is symmetrical with respect to its attenuation and transmission to two outputs and the two outgoing signals are supplied to a balanced receiver.

5. An arrangement as claimed in any one of Claims 2 to 4, characterized in that the first fibre coupler is symmetrical with respect to its attenuation and transmission to the two outputs and comprises two inputs which receive beams from two lasers which emit light of different frequencies.

6. An arrangement as claimed in Claim 1, characterized in that the local-oscillator beam is tapped off by the AOM from the optical transmitter beam applied to the AOM on a direct undiffracted path, which local oscillator beam is subsequently routed to the optical receiver via an intermediate AOM on a direct undiffracted path, and in that the measuring beam originating from the AOM on a diffracted path is sent in to the test-fibre via the intermediate AOM on a direct undiffracted path, the backscattered portion of the measuring beam being directed, via the diffracted path of the intermediate AOM which is excited with the acoustic frequency $f_a + f_z$, to the optical detector with an optical frequency which is offset by $f_a + f_z$.

7. An arrangement as claimed in Claim 6, characterized in that the duration of the acoustic excitation of the AOM and of the intermediate AOM can be controlled independently of one another.

8. An arrangement as claimed in Claim 6 or 7, characterized in that the signal launched into the test fibre and the backscatter signal sent into the optical receiver are frequency-shifted oppositely with different signs.

Fig.1

Fig.2

Fig.3

Fig.4